# EUROPEAN PATENT SPECIFICATION

(11) **EP 4 059 652 B1**
(45) Date of publication and mention of the grant of the patent: **01.10.2025**
(21) Application number: 20888606.9
(22) Date of filing: 13.11.2020
(51) Int. Cl.: B23K 11/00, B21D 22/00, B62D 21/02, B62D 25/04, B62D 25/20, B62D 21/15, B23K 31/02, B23K 101/00, B23K 101/18, B23K 103/04, B23K 103/10, B23K 103/14, B23K 103/08, B23K 103/18, B62D 29/00

(54) **REINFORCING MEMBER FOR COLD FORMING AND PARTS MANUFACTURED USING SAME**
VERSTÄRKUNGSELEMENT ZUR KALTUMFORMUNG UND DAMIT HERGESTELLTE TEILE
ÉLÉMENT DE RENFORCEMENT POUR FORMAGE À FROID ET PIÈCES FABRIQUÉES AU MOYEN DE CET ÉLÉMENT

(30) Priority: 13.11.2019 KR 20190145220
(43) Date of publication of application: 21.09.2022
(73) Proprietor: POSCO, Pohang-si, Gyeongsangbuk-do 37859 (KR)
(72) Inventor: OH, Kyung-Seok, Incheon 21985 (KR)
(74) Representative: Meissner Bolte Partnerschaft mbB
(86) International application number: PCT/KR2020/015819
(87) International publication number: WO 2021/096229

(56) References cited:
- EP-A1- 2 617 509
- EP-A1- 3 492 189
- JP-A- 2000 197 969
- JP-A- 2014 015 206
- JP-B2- 6 451 327
- KR-A- 20070 013 387
- KR-B1- 101 360 661
- US-A1- 2015 028 625

## Description

### Technical Field

The present disclosure relates to a reinforcing member for cold forming and parts manufactured using the same.

### Background Art

Recently, research into regulations on greenhouse gas emissions and also weight reductions for reducing the weight of eco-friendly vehicles has been conducted. For example, the application of plastics, aluminum, multi-materials has expanded, but there may be a problem in that costs of weight reduction may be relatively high and recycling may be difficult. An example can be found in EP 2 617 509 A1.

Accordingly, the application of giga-grade steel has been considered, but there may be problems to be solved, such as formability and processing costs.

### Summary of Invention

### Technical Problem

The present disclosure is suggested to provide a reinforcing member for cold forming which may prevent damage to welded zones even in cold forming performed at room temperature, and components manufactured using the same.

### Solution to Problem

A reinforcing member for cold forming according to an embodiment includes a blank member; and a reinforcing patch member provided to cover at least a portion of the blank member and coupled to the blank member by a plurality of welded zones, wherein an entire region of a heat-affected zone formed around the welded zone in the blank member is covered by the reinforcing patch member, and a heat-affected zone formed around a first welded zone of the welded zone is in contact with a central point of a second welded zone adjacent to the first welded zone or is spaced apart from the central point of the second welded zone The heat-affected zone is a zone of which a metal structure or mechanical properties changes due to heat during welding but is not melted.

The welded zone has a central point formed in a position spaced apart from an edge of the reinforcing patch member in the range of 12mm-30mm.

A distance between the first welded zone and the second welded zone may be formed to be within the range of 12mm-30mm.

The welded zone may be formed by spot welding by a welding head.

A plurality of the welded zones may be arranged along an edge of the reinforcing patch member and form an outer row.

A plurality of the welded zones may be arranged linearly on an inner side of the outer row and form an inner row.

The blank member or the reinforcing patch member may be provided as one of a steel plate, an aluminum plate, a magnesium plate, and a titanium plate.

The blank member and the reinforcing patch member may be formed of a material having a tensile strength of 500 MPa-2500 MPa.

A component according to an embodiment may be manufactured by forming a reinforcing member for cold forming at room temperature.

The component may be manufactured by forming at least one bent portion on the reinforcing member for cold forming.

The bent portion may be formed with a radius of curvature 2-10 times greater than a sum of a thickness of the blank member and a thickness of the reinforcing patch member.

### Advantageous Effects of Invention

The reinforcing member for cold forming of the present disclosure and components manufactured using the same may have an effect of preventing damage to a welded zone even in cold forming performed at room temperature.

However, the various and beneficial advantages and effects of the present disclosure are not limited to the above, and will be more easily understood in the course of describing specific embodiments of the present disclosure.

### Brief Description of Drawings

FIG. 1 is a plan diagram illustrating a reinforcing member for cold forming according to an embodiment of the present disclosure.
FIG. 2 is a plan diagram illustrating portion "A" in FIG. 1.
FIG. 3 is graphs illustrating a relationship between an offset distance and a load-bearing capacity in a reinforcing member for cold forming or a relationship between a distance between welded zones and load-bearing capacity according to an embodiment of the present disclosure.
FIG. 4 is a perspective diagram illustrating a component manufactured using a reinforcing member for cold forming according to an embodiment of the present disclosure.
FIG. 5 is a cross-sectional diagram illustrating a bent portion of a component manufactured using a reinforcing member for cold forming according to an embodiment of the present disclosure, viewed from the side.

### Best Mode for Invention

To reduce costs and weight, global mass-produced automobile manufacturers has increasingly applied hot forming steel and cold giga-grade steel.

Although a hot forming technique has a disadvantage in which heating equipment may occupy a large space and initial equipment investment costs may be high, a hot forming technique may have excellent formability and shape freezing properties as compared to a cold forming technique as a hot forming technique is formed under a high temperature condition with relatively high ductility. However, to reduce costs, research for replacing a hot forming technique with a cold forming technique may be necessary.

For example, as for a collision member such as a side member or a center pillar of a vehicle body, a tailoring technique which differently combines strength, thickness, or both within a single component to maximize collision performance. Among these tailoring techniques, a patch worked blank (PWB) technique in which a reinforcing patch member is attached to a portion of a blank member by spot welding and forming is performed using a single die has been applied to cold or hot press-formed products. However, in the case of components requiring bending deformation, such as a collision support member for vehicle, a large shear force may be applied to a welded zone by spot welding connecting a blank member and a reinforcing patch member due to a difference in the amount of deformation between the two components, such that the welded zone may be fractured, which may be problematic.

Particularly, high ductility may not be obtained in cold forming performed at room temperature, the risk of fracture of the welded zone may be greater.

Accordingly, the present applicant suggests a reinforcing member for cold forming with a small risk of fracture of the welded zone even in cold forming, and components manufactured using the same.

Hereinafter, an embodiment will be described with reference to the accompanying drawings. However, the embodiment may be modified in various other forms, and the scope of the embodiment is not limited to the embodiment described below. The shapes and sizes of elements in the drawings may be exaggerated for clearer illustration.

An expression used in the singular encompasses the expression of the plural, unless it has a clearly different meaning in context. Throughout the specification, the same reference characters or reference characters assigned in a similar manner refer to the same or corresponding elements.

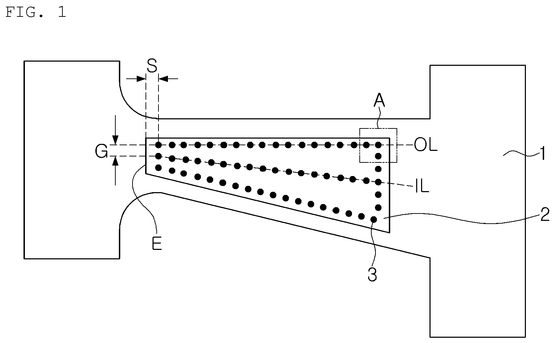

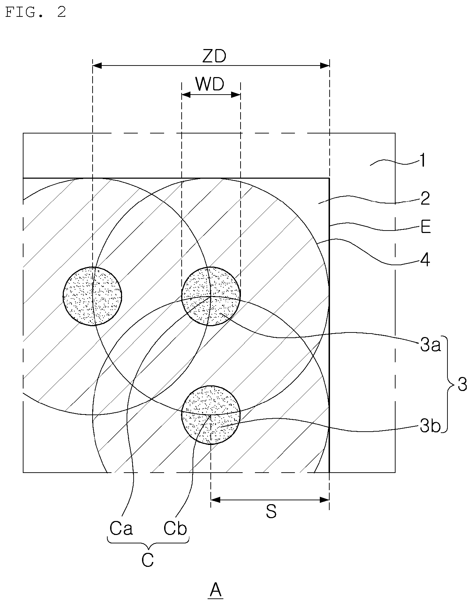

FIG. 1 is a plan diagram illustrating a reinforcing member for cold forming according to an embodiment. FIG. 2 is a plan diagram illustrating portion "A" in FIG. 1. Referring thereto, the reinforcing member for cold forming according to an embodiment may include a blank member 1 and a reinforcing patch member 2.

The reinforcing patch member 2 may be provided to cover at least a portion of the blank member 1, and may be coupled to the blank member 1 by a plurality of welded zones 3.

The welded zone 3 may formed when the blank member 1 and the reinforcing patch member 2, which are melted and solidified by a welding head of a welding machine, are coupled to each other. Also, a heat-affected zone (HAZ) may be formed around the welded zone 3 by heat generated when the welded zone 3 is formed. The heat-affected zone 4 is a zone of which a metal structure or mechanical properties may change due to heat during welding but may not be melted.

The entire region of the heat-affected zone 4 formed around the welded zone 3 may be positioned in an area corresponding to the reinforcing patch member 2.

Also, the heat-affected zone 4 formed around the first welded zone 3a of the welded zone 3 may be in contact with a central point Cb of a second welded zone 3b adjacent to a first welded zone 3a, or may be spaced apart from the central point Cb of the second welded zone. Here, the central point C of the welded zone 3 may be a center of a circle having two points disposed furthest from the welded zone 3 as a diameter.

To this end, the position of the welded zone 3 may be limited to an offset distance S, which is a distance from the edge E of the reinforcement patch member 2 to the central point C of the welded zone 3.

The minimum value of the offset distance S may be limited to a value of when an outermost region of the heat-affected zone 4 is in contact with an edge E of the reinforcing patch member 2.

Accordingly, a molten nugget may be stably formed during the formation of the welded zone 3. Also, bonding force of the welded zone 3 formed by solidification of the molten nugget may be formed to exceed a required reference value.

As such, the reinforcing member for cold forming according to an embodiment and the component manufactured using the same may, even when being manufactured by cold forming, prevent fracture of the welded zone 3, and may secure the required load-bearing capacity.

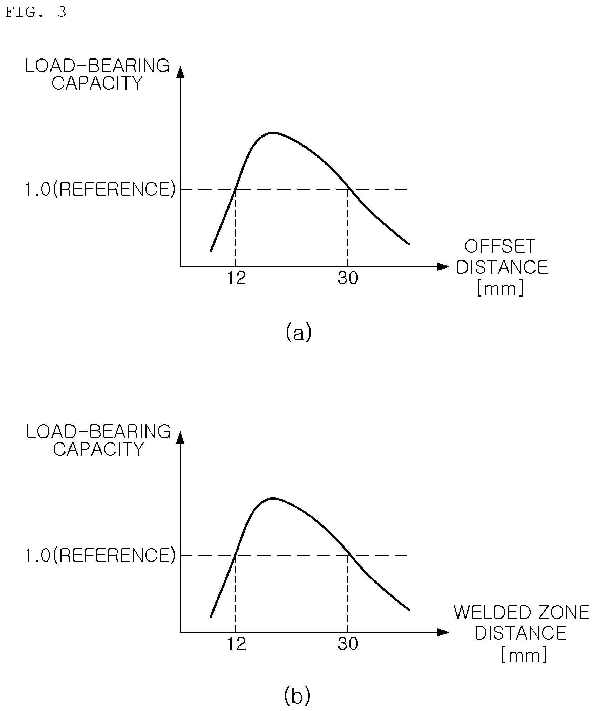

FIG. 3 is graphs illustrating a relationship between an offset distance S and a load-bearing capacity in a reinforcing member for cold forming or a relationship between a distance G between the welded zones 3 and load-bearing capacity according to an embodiment.

Specifically, the graph in FIG. 3(a) indicates the relationship between the offset distance S from the edge E of the reinforcement patch member 2 to the central point C of the welded zone 3 and the load-bearing capacity. Referring to the graph, in the welded zone 3 according to an embodiment, a central point C may be formed in a position spaced apart from the edge E of the reinforcing patch member 2 in the range of 12 mm-30 mm.

As indicated in the graphs, the offset distance S from the edge E of the reinforcement patch member 2 to the central point C of the welded zone 3 may secure required load-bearing capacity when the distance is in the range of 12mm-30mm.

Here, a minimum value of the offset distance S, 12 mm, may be a value derived by a condition in which a molten nugget may be formed. For example, when a case in which the diameter of the welding head is 8 mm is applied, the diameter WD of the welded zone 3 may be 8 mm. The heat-affected zone 4 may have the same central point C as the central point C of the welded zone 3, and may form a donut-shaped region with a diameter ZD of 24 mm. In this relationship, the heat-affected zone 4 may be completely formed only when the central point C is formed in a position spaced apart from the edge E of the reinforcing patch member 2 by at least 12 mm. Also, in this case, the molten nugget may be fully formed.

The maximum value of the offset distance S, 30 mm, may be a maximum value for satisfying the reference value of the load-bearing capacity. For example, the case in which tensile strength of the blank member 1 is 1200 MPa, a thickness t1 is 1.5 mm, tensile strength of the reinforcing patch member 2 is 900 MPa, and a thickness t2 is 1.2 mm may be as below. The thickness of the reinforcing member for cold forming formed by coupling the blank member 1 and the reinforcing patch member 2 by the welded zone 3 may be 2.7 mm, and tolerable tensile strength may be 1070 MPa ([1200 × 1.5 +900×1.2]/2.7=1070). That is, in the graph in FIG. 3(a), the reference "1" of the load-bearing capacity may become "1070 MPa" under the above conditions. Accordingly, to satisfy the load-bearing capacity of "1070 MPa" or more, the offset distance S should be 30 mm or less.

Also, the reinforcing member for cold forming may also be limited to the distance G between the welded zones 3 adjacent to each other. For example, the position of the first welded zone 3a may also be limited to the distance G with the adjacent second welded zone 3b.

Specifically, the central point Ca of the first welded zone 3a should be spaced apart from the central point Cb of the second welded zone 3b with the distance G in the range of 12mm-30mm.

This is for the central point Ca of the first welded zone 3a to be formed in a position further spaced apart from the second welded zone 3b than a position of the case in which the central point Ca of the first welded zone 3a is in contact with the heat-affected component 4 of the neighboring second welded zone 3a or at least the position.

Accordingly, the problem in which solidification of the molten nugget for forming the first welded zone 3a is delayed by the heat-affected zone 4 of the second welded zone 3b may be addressed. Accordingly, the problem in which the bonding strength of the reinforcing member for cold forming is reduced may be addressed, and the load-bearing capacity of the reinforcing member for cold forming may satisfy the reference value, which may be indicated in the graph in FIG. 3(b).

Here, the minimum value of the distance G between the welded zones 3, 12 mm, may be the value at which fracture of the first welded zone 3a may be prevented even in a cooling environment under the influence of the heat-affected zone 4 of the second welded zone 3b. That is, it may be assumed that, when the distance G between the welded zones 3 is smaller than 12 mm, more welded zones 3 may be formed, such that the probability of fracture may be reduced. However, on the contrary, the effect of delaying cooling by the heat-affected zone 4 of the second welded zone 3b may increase in the first welded zone 3a, such that the problem of a decrease in bonding strength may also increase. Accordingly, the reinforcing member for cold forming may not secure the load-bearing capacity corresponding to the reference value.

For example, when a case in which the diameter of the welding head is 8mm is applied, the diameter WD of the welded zone 3 formed may be 8mm. Also, the heat-affected zone 4 may be the same central point C as the central point C of the welded zone 3, and may form a donut-shaped region with a diameter ZD of 24 mm. In this case, a case in which the distance G between the central points C of the welded zones 3 is 12 mm may be be the minimum distance G satisfying the reference value.

Also, the maximum value of the distance G between the welded zones 3 of 30mm may be a maximum value for satisfying the reference value of the load-bearing capacity. For example, the case in which tensile strength of the blank member 1 is 1200 MPa, the thickness t1 is 1.5 mm, tensile strength of the reinforcing patch member 2 is 900 MPa, and the thickness t2 is 1.2 mm may be as below. The thickness of the reinforcing member for cold forming formed by coupling the blank member 1 and the reinforcing patch member 2 by the welded zone 3 may be 2.7 mm, and tolerable tensile strength may be 1070 MPa ([1200 × 1.5 +900×1.2]/2.7=1070). That is, in the graph in FIG. 3B, the reference "1" of the load-bearing capacity may become "1070 MPa" under the above conditions. Accordingly, to satisfy the load-bearing capacity of "1070 MPa" or more, the distance G between the welded zones 3 should be 30 mm or less.

Also, under these conditions, the entire welded zone 3 forming the reinforcing member for cold forming may be satisfied, and only a portion of the welded zone 3 may be satisfied depending on the shape of the manufactured component. For example, 60% or more of the total number of the welded zones 3 forming the reinforcing member for cold forming may be adjusted to satisfy the above conditions.

Since the blank member 1 and the reinforcing patch member 2 have different required tensile strength, which is a reference value required for components manufactured using the reinforcing member for cold forming, the material and tension thereof may be limited to secure the above.

That is, the blank member 1 or the reinforcing patch member 2 may be provided as one of a steel plate, an aluminum plate, a magnesium plate, and a titanium plate. Also, the blank member 1 and the reinforcing patch member 2 may be provided by a material having tensile strength of 500 MPa to 2500 MPa.

Here, the welded zone 3 may be formed by spot welding by a welding head. That is, it is suggested that the reinforcing member for cold forming of the embodiment may be manufactured by spot welding applied when a conventional PWB reinforcing member is manufactured.

Also, a plurality of the welded zones 3 of the reinforcing member for cold forming according to an embodiment may be disposed along the edge E shape of the reinforcing patch member 2 and may form an outer row OL. The arrangement position of the welded zone 3 to the shape of the edge E of the reinforcement patch member 2 may be limited as above to distribute external force such as an impact force applied to the reinforcement patch member 2 by each welded zone 3.

Also, a plurality of the welded zones 3 of the reinforcing member for cold forming according to an embodiment may be linearly disposed in the outer row OL and may form the inner row IL. By forming the welded zone 3 in the inner row IL as above, in the reinforcement member for cold forming, the welded zone 3 may supplement load-bearing capacity in addition to the tensile strength secured by forming the welded zone 3 in the outer row OL. A plurality of the inner row IL may be provided, and accordingly, the effect of supplementing load-bearing capacity may be further increased.

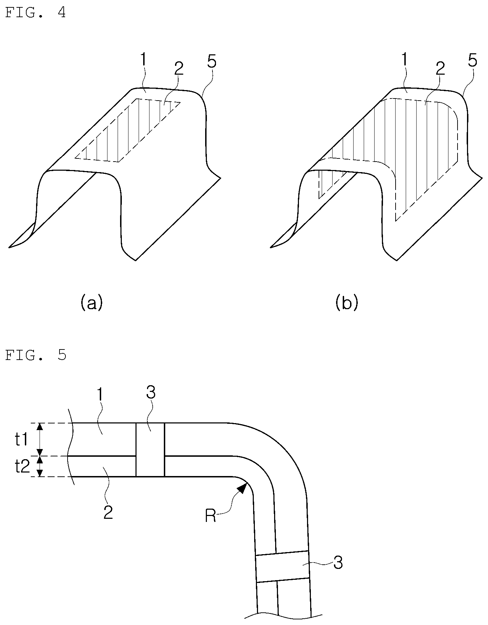

FIG. 4 is a perspective diagram illustrating a component manufactured using a reinforcing member for cold forming according to an embodiment. Here, FIG. 4(a) illustrates an embodiment in which the reinforcing patch member 2 is disposed only on an upper surface of the component. FIG. 4 (b) illustrates an embodiment in which the reinforcing patch member 2 is arranged up to a side surface of the component. FIG. 5 is a cross-sectional diagram illustrating a bent portion 5 of a component manufactured using a reinforcing member for cold forming according to an embodiment of the present disclosure, viewed from the side.

Referring to the drawings, the component according to an embodiment may be manufactured by forming the reinforcing member for cold forming at room temperature.

That is, when the reinforcing member for cold forming is used, even when components are produced by a cold forming process, which may be the forming at room temperature, fracture of the welded zone 3 may be prevented and the required load-bearing capacity may be secured.

Here, the cold forming process may refer to forming processes by rolling at room temperature without heating an object (cold rolling), bending processing (cold bending), forging (cold forging, cold heading, and cold press), extrusion (cold extrusion), or the like, differently from a hot forming process in which an object is formed by heating. Generally, the cold forming process may refer to cold press working in which forming is performed in a product form by reduction at room temperature.

Also, the component according to an embodiment may be manufactured by forming at least one bent portion 5 on the reinforcing member for cold forming. That is, the component may be formed by bending, pressing, or the like, to form the bent portion 5 among cold forming processes.

A conventional PWB reinforcing member may have a problem in that most of the welded zone may be fractured when the bent portion is processed by cold processing, whereas the component according to an embodiment may be formed to include the bent portion 5, and may be formed using the reinforcing member for cold forming, fracture of the welded zone 3 may be prevented.

The bent portion 5 of the component according to an embodiment may be formed with a radius of curvature R which may be 2 to 10 times greater than a sum of the thickness t1 of the blank member 1 and the thickness t2 of the reinforcing patch member 2.

Here, when the radius of curvature R of the bent portion 5 is smaller than the lower limit value, the welded zone 3 disposed adjacent to the bent portion 5 may be fractured. Also, when the radius of curvature R of the bent portion 5 is greater than the upper limit, the degree of freedom in forming components may be extremely limited.

Here, specific examples of the components manufactured using the reinforcing member for cold forming may include a collision member such as a side member or center pillar of a vehicle body, a floor lunge member in the underbody of the vehicle body, a floor tunnel, and the like.

The embodiment relates to a reinforcing member for cold forming and components manufactured using the same, and by improving Patch Worked Blank (PWB) technique among tailoring techniques, fracture of the welded zone 3 may be prevented, and components may be formed by cold process performed at room temperature.

By using the reinforcing member for cold forming according to an embodiment and the components manufactured using the same, cold forming may be performed without a large space for heating equipment such as in a hot forming process, high initial equipment investment costs, and high operating costs, such that equipment costs and operating costs may be reduced.

The reinforcing member for cold forming and the components manufactured using the same according to an embodiment may reduce limitations on the limited range of curvature radius of the bent portion 5 during cold forming and the limited range of the thickness of the reinforcing patch member 2 may be reduced, such that the degree of freedom in component design may increase.

For example, the reinforcement member for cold forming and the components manufactured using the same of the embodiment may satisfy performance required for bending collision members among vehicle structural components and may allow the bending collision member to be formed by a cold forming process.

That is, vehicle structural components may be developed according to various purposes, such as high-strength shape members, high rigidity members, compression collision members, and bending collision members. Here, in the bending collision member, internal penetration should be minimized to protect passengers, and fracture should not occur. In this aspect, the reinforcing member for cold forming and the components manufactured using the same of the embodiment may be formed by a cold process, which may be the forming at room temperature, and may also satisfy performance required for the bending collision member.

For example, as for the center pillar, deformation of an upper portion of the center pillar may need to be prevented to protect an upper body of a passenger. To this end, the upper portion of the center pillar may require relatively high tensile strength as compared to that of the surrounding components. In this aspect, the reinforcing member for cold forming of the embodiment may secure such tensile strength, and the manufacturing of the center pillar may be performed at room temperature, such that the reinforcing member may be produced at a lower cost than that of hot processes.

That is, in the hot forming process, overall ductility may increase, the load applied to the welded zone 3 may also be lowered, and the amount of shear deformation may be removed during phase transformation, such that the risk of fracture of the welded zone 3 may be reduced, and the hot forming process may be applied to forming a conventional reinforcing member. However, a cold forming process may not have the effect of hot forming process described above, such that a cold forming process may not be applied to the conventional forming of a reinforcing member. However, the reinforcing member for cold forming of the embodiment may satisfy the performance required even in the cold forming process.

## Claims

1. (Currently amended) A reinforcing member for cold forming, comprising:
a blank member; and
a reinforcing patch member provided to cover at least a portion of the blank member and coupled to the blank member by a plurality of welded zones,
wherein an entire region of a heat-affected zone formed around the welded zones in the blank member is covered by the reinforcing patch member, and the heat-affected zone formed around a first welded zone among the welded zones is in contact with a central point of a second welded zone adjacent to the first welded zone or is spaced apart from the central point of the second welded zone,
the heat-affected zone is a zone of which a metal structure or mechanical properties changes due to heat during welding but is not melted.

2. The reinforcing member of claim 1, wherein the welded zone has a central point formed in a position spaced apart from an edge of the reinforcing patch member in the range of 12mm-30mm.

3. The reinforcing member of claim 1, wherein a distance between the first welded zone and the second welded zone is formed to be within the range of 12mm-30mm.

4. The reinforcing member of claim 1, wherein the welded zone is formed by spot welding by a welding head.

5. The reinforcing member of claim 1, wherein a plurality of the welded zones are arranged along an edge of the reinforcing patch member and form an outer row.

6. The reinforcing member of claim 5, wherein a plurality of the welded zones are arranged linearly on an inner side of the outer row and form an inner row.

7. The reinforcing member of claim 1, wherein the blank member or the reinforcing patch member is provided as one of a steel plate, an aluminum plate, a magnesium plate, and a titanium plate.

8. The reinforcing member of claim 1, wherein the blank member and the reinforcing patch member are formed of a material having a tensile strength of 500 MPa-2500 MPa.

9. A component manufactured by forming a reinforcing member for cold forming at room temperature of one of claims 1 to 8.

10. The component of claim 9, wherein the component is manufactured by forming at least one bent portion on the reinforcing member for cold forming.

11. The component of claim 10, wherein the bent portion is formed with a radius of curvature 2-10 times greater than a sum of a thickness of the blank member and a thickness of the reinforcing patch member.

## Patentansprüche

1. Verstärkungselement zum Kaltformen, umfassend:
ein Rohlingelement; und
ein verstärkendes Patch-Element, das dazu bereitgestellt ist, mindestens einen Abschnitt des Rohlingelements abzudecken, und durch eine Vielzahl von geschweißten Zonen mit dem Rohlingelement gekoppelt ist,
wobei ein gesamter Bereich einer wärmebeeinflussten Zone, die um die geschweißten Zonen in dem Rohlingelement gebildet ist, durch das verstärkende Patch-Element bedeckt ist und die wärmebeeinflusste Zone, die um eine erste geschweißte Zone unter den geschweißten Zonen gebildet ist, in Kontakt mit einem Mittelpunkt einer zweiten geschweißten Zone steht, die an die erste geschweißte Zone angrenzt, oder von dem Mittelpunkt der zweiten geschweißten Zone beabstandet ist,
wobei die wärmebeeinflusste Zone eine Zone ist, deren Metallstruktur oder mechanische Eigenschaften sich aufgrund von Wärme während des Schweißens ändern, aber nicht schmelzen.

2. Verstärkungselement nach Anspruch 1, wobei die geschweißte Zone einen Mittelpunkt aufweist, der in einer Position gebildet ist, die von einer Kante des verstärkenden Patch-Elements im Bereich von 12 mm - 30 mm beabstandet ist.

3. Verstärkungselement nach Anspruch 1, wobei ein Abstand zwischen der ersten geschweißten Zone und der zweiten geschweißten Zone so gebildet ist, dass er im Bereich von 12 mm - 30 mm liegt.

4. Verstärkungselement nach Anspruch 1, wobei die geschweißte Zone durch Punktschweißen durch einen Schweißkopf gebildet ist.

5. Verstärkungselement nach Anspruch 1, wobei eine Vielzahl der geschweißten Zonen entlang einer Kante des verstärkenden Patch-Elements angeordnet ist und eine äußere Reihe bildet.

6. Verstärkungselement nach Anspruch 5, wobei eine Vielzahl der geschweißten Zonen linear an einer Innenseite der äußeren Reihe angeordnet ist und eine innere Reihe bildet.

7. Verstärkungselement nach Anspruch 1, wobei das Rohlingelement oder das verstärkende Patch-Element als eine von einer Stahlplatte, einer Aluminiumplatte, einer Magnesiumplatte und einer Titanplatte bereitgestellt ist.

8. Verstärkungselement nach Anspruch 1, wobei das Rohlingelement und das verstärkende Patch-Element aus einem Material gebildet sind, das eine Zugfestigkeit von 500 MPa - 2500 MPa aufweist.

9. Komponente, die durch Bilden eines Verstärkungselements zum Kaltformen bei Raumtemperatur nach einem der Ansprüche 1 bis 8 hergestellt wird.

10. Komponente nach Anspruch 9, wobei die Komponente durch Bilden von mindestens einem gebogenen Abschnitt an dem Verstärkungselement zum Kaltformen hergestellt wird.

11. Komponente nach Anspruch 10, wobei der gebogene Abschnitt mit einem Krümmungsradius gebildet ist, der 2-10 Mal größer ist als eine Summe einer Dicke des Rohlingelements und einer Dicke des verstärkenden Patch-Elements.

## Revendications

1. Organe de renforcement pour formage à froid, comprenant :
un organe d'ébauche ; et
un organe pièce de renforcement prévu pour recouvrir au moins une portion de l'organe d'ébauche et couplé à l'organe d'ébauche par une pluralité de zones soudées,
dans lequel une région entière d'une zone affectée par la chaleur formée autour des zones soudées dans l'organe de base est recouverte par l'organe pièce de renforcement, et la zone affectée par la chaleur formée autour d'une première zone soudée parmi les zones soudées est en contact avec un point central d'une deuxième zone soudée adjacente à la première zone soudée ou est espacée du point central de la deuxième zone soudée,
la zone affectée par la chaleur est une zone dont une structure métallique ou des propriétés mécaniques changent en raison de la chaleur pendant le soudage, mais n'est pas fondue.

2. Organe de renforcement selon la revendication 1, dans lequel la zone soudée a un point central formé dans une position espacée d'un bord de l'organe pièce de renforcement dans la plage de 12 mm à 30 mm.

3. Organe de renforcement selon la revendication 1, dans lequel une distance entre la première zone soudée et la deuxième zone soudée est formée pour être dans la plage de 12 mm à 30 mm.

4. Organe de renforcement selon la revendication 1, dans lequel la zone soudée est formée par soudage par points à l'aide d'une tête de soudage.

5. Organe de renforcement selon la revendication 1, dans lequel une pluralité de zones soudées sont agencées le long d'un bord de l'organe pièce de renforcement et forment une rangée externe.

6. Organe de renforcement selon la revendication 5, dans lequel une pluralité de zones soudées sont agencées de manière linéaire sur un côté interne de la rangée externe et forment une rangée interne.

7. Organe de renforcement selon la revendication 1, dans lequel l'organe d'ébauche ou l'organe pièce de renforcement est prévu sous forme d'une parmi une plaque d'acier, une plaque d'aluminium, une plaque de magnésium et une plaque de titane.

8. Organe de renforcement selon la revendication 1, dans lequel l'organe d'ébauche et l'organe pièce de renforcement sont formés d'un matériau ayant une résistance à la traction de 500 MPa à 2500 MPa.

9. Composant fabriqué en formant un organe de renforcement pour formage à froid à température ambiante de l'une des revendications 1 à 8.

10. Composant selon la revendication 9, dans lequel le composant est fabriqué en formant au moins une portion pliée sur l'organe de renforcement pour formage à froid.

11. Composant selon la revendication 10, dans lequel la portion pliée est formée avec un rayon de courbure 2 à 10 fois plus grand qu'une somme d'une épaisseur de l'organe d'ébauche et d'une épaisseur de l'organe pièce de renforcement.
